# EUROPÄISCHE PATENTSCHRIFT

(11) **EP 3 250 793 B1**
(45) Veröffentlichungstag und Bekanntmachung des Hinweises auf die Patenterteilung: **18.03.2020**
(21) Anmeldenummer: 15816406.1
(22) Anmeldetag: 11.12.2015
(51) Int. Cl.: F01L 1/02, F16H 55/08

(54) **MEHRSTUFIGER STEUERTRIEB ZWISCHEN EINER KURBELWELLE UND MINDESTENS EINER NOCKENWELLE EINES VERBRENNUNGSMOTORS**
STAGED DRIVE BETWEEN CRANKSHAFT ANE AT LEAST ONE CAMSHAFT
ENTRAINEMENT ÉTAGÉ ENTRE VILEBREQUIN ET AU MOINS UN ARBRE À CAMES

(30) Priorität: 29.01.2015 DE 102015201589
(43) Veröffentlichungstag der Anmeldung: 06.12.2017
(73) Patentinhaber: Volkswagen Aktiengesellschaft, 38440 Wolfsburg (DE)
(72) Erfinder: PIETRUSCHKA, Christian, 38102 Braunschweig (DE); KÖNIG, Nils, 38448 Wolfsburg (DE)
(86) Internationale Anmeldenummer: PCT/EP2015/079418
(87) Internationale Veröffentlichungsnummer: WO 2016/119965

(56) Entgegenhaltungen:
- DE-A1- 19 812 939
- DE-A1-102007 009 489
- DE-A1-102010 025 187

## Beschreibung

Die Erfindung betrifft einen mehrstufigen Steuertrieb zwischen einer Kurbelwelle und mindestens einer Nockenwelle eines Verbrennungsmotors gemäß dem Oberbegriff des Anspruchs 1, insbesondere für einen in einem Kraftfahrzeug einzusetzenden Verbrennungsmotor.

Aus EP 1 448 916 B1 sind als Synchronantriebsvorrichtungen bezeichnete einstufige Steuertriebe bekannt. Diese umfassen einen ersten Rotor, einen zweiten Rotor sowie optionale weitere Rotoren, die mehrere Zähne zum Eingriff mit Eingriffsabschnitten einer Hülltriebsstruktur aufweisen. Bei diesen Synchronantriebsvorrichtungen wird der erste Rotor aktiv angetrieben. Der zweite Rotor und die optionalen weiteren Rotoren hingegen werden über die Hülltriebstruktur angetrieben, wobei der zweite Rotor mit einer Drehlastanordnung verbunden ist, die ein periodisch fluktuierendes Lastdrehmoment erzeugt. Bei der Hülltriebsstruktur handelt es sich insbesondere um einen Zahnriemen oder eine Antriebskette. Bei dem ersten Rotor handelt es sich insbesondere um eine Kurbelwelle und bei dem zweiten Rotor um eine Nockenwelle. Bei den beschriebenen Synchronantriebsvorrichtungen soll mindestens ein Rotor ein nicht-kreisförmiges Profil mit mindestens zwei vorstehenden Bereichen aufweisen, die sich mit zurückgezogenen Bereichen abwechseln, wobei die Winkelpositionen der vorstehenden und zurückgezogenen Bereiche des nicht-kreisförmigen Profils relativ zu einer Winkelposition des periodisch fluktuierenden Lastdrehmoments, das an dem zweiten Rotor vorhanden ist, und der Wert der Exzentrizität des nicht-kreisförmigen Profils so sind, dass das nicht-kreisförmige Profil auf den zweiten Rotor ein entgegengesetzt fluktuierendes Korrekturdrehmoment ausübt, das das fluktuierende Lastdrehmoment der Drehlastanordnung reduziert oder im Wesentlichen aufhebt.

Aus EP 1 664 596 B1 ist eine Drehkomponente mit einem Rotor bekannt, der eine Vielzahl von Zähnen aufweist, die um den Umfang des Rotors herum angeordnet sind, wobei jeder Zahn eine obere Wölbung aufweist und zwischen jedem Paar benachbarter Zähne ein Tal vorhanden ist. Dabei liegen die oberen Wölbungen der Zähne auf einer gekrümmten Hüllkurve, die den Umfang des Rotors bildet, wobei der Umfang des Rotors ein nicht-kreisförmiges Profil hat. Das Profil weist wenigstens zwei vorstehende Abschnitte auf, die sich mit vertieften Abschnitten abwechseln, wobei der Abstand zwischen den Mittelpunkten der oberen Wölbungen jedes Paars benachbarter Zähne im Wesentlichen der gleiche ist, das Profil des Tals zwischen jedem Paar benachbarter Zähne im Wesentlichen das gleiche ist und der Abstand zwischen dem Mittelpunkt jeder oberen Wölbung und der Achse des Rotors um den Umfang herum so variiert, dass das nicht-kreisförmige Profil entsteht. Dabei sind die Mittelpunkte der oberen Wölbungen der Zähne jeweils an Schnittpunkten benachbarter Seiten eines nicht-regelmäßigen Polygons mit gleichen Seiten positioniert, die in einer nicht-kreisförmigen Struktur angeordnet sind. Die Verwendung des in EP 1 664 596 B1 beschriebenen Rotors ist nur in Verbindung mit einstufigen Steuertrieben beschrieben.

Aus DE 10 2010 025 187 A1 ist eine Brennkraftmaschinenventiltriebvorrichtung mit einem Umschlingungsantrieb bekannt. Die Brennkraftmaschinenventiltriebvorrichtung umfasst zumindest ein Kurbelwellenrad, zumindest ein Nockenwellenrad und zumindest eine Zwischenradeinheit zur Realisierung von zumindest einer ersten Übersetzungsstufe und einer zweiten Übersetzungsstufe zwischen dem Kurbelwellenrad und dem Nockenwellenrad. Die Zwischenradeinheit umfasst dabei zumindest ein unrund ausgebildetes Zwischenstufenrad.

Mit Hilfe von Versuchen und umfassenden Simulationsberechnungen wurde festgestellt, dass der Einsatz von Rotoren mit nicht-kreisförmigem Profil in einem mehrstufigen Steuertrieb antriebsseitig im Bereich der Kurbelwelle und/oder abtriebsseitig im Bereich einer Nockenwelle nicht geeignet ist, um störende Resonanzfrequenzen mit daraus resultierenden hohen Reibkräften im Steuertrieb, die in einzelnen Drehzahlbereichen auftreten, in allen Drehzahlbereichen auf ein gewünschtes Niveau zu reduzieren bzw. zu vermeiden.

Der Erfindung liegt die Aufgabe zugrunde, einen mehrstufigen Steuertrieb zwischen einer Kurbelwelle und mindestens einer Nockenwelle eines Verbrennungsmotors mit verringerter Reibleistung zur Verfügung zu stellen, der kostengünstig realisiert werden kann.

Die Lösung der Aufgabe erfolgt erfindungsgemäß mit den Merkmalen des Anspruchs 1. Weitere praktische Ausführungsformen und Vorteile der Erfindung sind in Verbindung mit den Unteransprüchen beschrieben.

Ein erfindungsgemäßer mehrstufiger Steuertrieb eines Verbrennungsmotors mit einer Kurbelwelle und mindestens einer Nockenwelle umfasst einen Primärtrieb, mittels welchem ein mit einer Kurbelwelle gekoppelter erster Rotor über eine erste Hülltriebsstruktur einen zweiten Rotor antreibt, wobei der zweite Rotor drehfest mit einem dritten Rotor verbunden ist und wobei der dritte Rotor Antriebselement eines Sekundärtriebes ist, mittels welchem über eine zweite Hülltriebsstruktur eine mit der mindestens einen Nockenwelle gekoppelter vierter Rotor angetrieben wird. Dabei weist der zweite Rotor und/oder dritte Rotor eine nicht-kreisförmige Kontur auf. Zudem weisen der zweite Rotor und/oder der dritte Rotor eine Kontur mit einer mindestens einfachen Ovalität auf, wobei die Amplitude der Ovalität im Bereich von 0,1 bis 5 Prozent des Teilkreisdurchmessers beträgt. Unter Hülltriebsstrukturen werden vorliegend insbesondere Zahnriemen oder Ketten sowie sonstige, ähnliche umlaufende Antriebselemente verstanden. Unter Rotoren werden insoweit insbesondere Zahnräder zum Umlenken von Ketten oder Riemenräder zum Umlenken von Zahn- oder sonstigen Riemen verstanden. Ein erfindungsgemäßer mehrstufiger Steuertrieb hat den Vorteil, dass das durch die Modifikation der Kontur eines an einem Zwischenrad ausgebildeten Rotors das Schwingungsverhalten des Steuertriebes verbessert und die Verlustleistung reduziert werden kann. Dies lässt sich insoweit kostengünstig realisieren, als ein unmittelbar mit der Kurbelwelle oder einer Nockenwelle verbundener Rotor nicht modifiziert werden muss.

Erfindungsgemäß weist der zweite Rotor und/oder der dritte Rotor eine Kontur mit einer mindestens einfachen Ovalität auf. Darunter sind einfache Ovalitäten und Ovalitäten höherer Ordnung, z.B. dreifacher, vierfacher Ordnung etc., zu verstehen. Durch Simulationsberechnungen und erste Versuche hat sich gezeigt, dass sich durch Ausbildung von Konturen mit einer Ovalität erster oder mehrfacher Ordnung die Reibleistung besonders effizient reduzieren lässt. Unter einer Ovalität mehrfacher Ordnung, beispielsweise dritter oder vierter Ordnung wird ein Element verstanden, das anstelle einer kreisrunden Kontur eine Kontur aufweist, deren Radius über den Umfang verteilt drei Maxima und drei Minima (dreifacher Ordnung) bzw. vier Maxima und vier Minima (vierfacher Ordnung) aufweist. Es ist auch möglich, an einem Rotor (zweiter Rotor oder dritter Rotor) Ovalitäten gleicher Ordnung in unterschiedlicher Phasenlage zueinander miteinander zu kombinieren und/oder verschiedene Ordnungen von Ovalitäten miteinander zu kombinieren und somit an einem Rotor überlagert abzubilden, insbesondere um einer Schwingungsanregung verschiedener schwingungsanregender Elemente entgegenzuwirken. In Bezug auf schwingungsanregende Elemente in einem Steuertrieb wird insbesondere auf Kolbenpumpen sowie auf Einlass- und Auslassventile verwiesen. Um möglichst effizient den von den Elementen auf den Steuertrieb einwirkenden Schwingungen entgegenzuwirken, können die schwingungsanregenden Ordnungen und ihre Phasenlage in Bezug auf einen Rotor (zweiter oder dritter Rotor) ermittelt und dann kombiniert entsprechend ihrer Phasenlage an dem Rotor (zweiter oder dritter Rotor) angeordnet werden. Mit der vorstehend beschriebenen Vorgehensweise kann durch unterschiedliche Elemente verursachten Schwingungen wirksam entgegengewirkt werden. Der Vollständigkeit halber sei darauf hingewiesen, dass in Bezug auf einzelne Elemente, insbesondere in Bezug auf mehrere Einlassventile oder Auslassventile, auch eine Summenbetrachtung vorgenommen werden kann, d.h. die Summe der Schwingungsanregungen aller Einlassventile und/oder aller Auslassventile als ein schwingungsanregendes Element betrachtet werden kann. Nur beispielhaft wird darauf verwiesen, dass erfindungsgemäß 2, 3, 4, 5, 6, 8, 10 oder 12 Zylindermotoren mit unterschiedlichen Ventiltrieben mit Pumpenanregungen von 2., 3. oder 4. Ordnung kombiniert werden können. Auf einige konkrete Beispiele wird in Verbindung mit der Figurenbeschreibung noch im Detail eingegangen.

Erfindungsgemäß wird die Amplitude einer Ovalität des zweiten Rotors und/oder dritten Rotors im Bereich von 0,1 bis 5,0 Prozent des Teilkreisdurchmessers des jeweiligen Rotors gewählt. Besonders bevorzugt ist ein Bereich zwischen 0,5 bis 2,0 Prozent und weiter bevorzugt ein Bereich von 0,6 bis 1,0 Prozent bezogen auf einen Rotor mit einem Teilkreisdurchmesser von ca. 55 mm bedeutet dies, dass die Amplitude, wenn sie in einem Bereich von 0,6 bis 1,0 Prozent liegen soll, zwischen 0,33 mm (55 mm x 0,006) und 0,55 mm (55 mm x 0,01) beträgt. Durch die Wahl einer Amplitude in dem vorstehend spezifizierten Bereich konnte die Reibleistung eines erfindungsgemäßen Steuertriebes besonders deutlich reduziert werden.

In einer praktischen Ausführungsform eines erfindungsgemäßen Steuertriebes umfasst der Sekundärtrieb ein Spannelement, mittels welchem eine Vorspannungskraft auf die zweite Hülltriebsstruktur ausgeübt wird. Als ein solches Spannelement kommt insbesondere ein Element in Frage, das auf eine sich entlang der zweiten Hülltriebsstruktur erstreckende Gleitschiene und/oder ein Spann-Kettenrad wirkt und die Hülltriebsstruktur mithilfe der Gleitschiene und/oder ein Spann-Kettenrad vorspannt. Diesbezüglich wird insbesondere auf Gleitschienen verwiesen, welche um einen Drehpunkt drehbar gelagert sind und bei welchen das Spannelement beabstandet zu dem Drehpunkt angeordnet ist und die Gleitschiene in Richtung der Hülltriebsstruktur drückt.

Mithilfe ausführlicher Simulationsberechnungen wurde ermittelt, dass die Reduzierung der Reibleistung eines erfindungsgemäßen Steuertriebes besonders groß ist, wenn die Vorspannungskraft eines Spannelements kleiner als 45 N eingestellt ist. In der Praxis werden häufig aus Kostengründen Toleranzen von 1 N oder mehr zugelassen, beispielsweise Toleranzen von 5 N, von 8 N oder von bis zu 10 N. Der Wert von 45 N kann in diesem Fall auch als Mittelwert von Kontrollmessungen an mehreren Spannelementen für erfindungsgemäße Steuertriebe verstanden werden. Bevorzugt wird ein Mittelwert von maximal 40 N eingestellt, weiter bevorzugt maximal 35 N und besonders bevorzugt von maximal 30 N. Bevorzugte Bereiche für die einzustellende Vorspannungskraft sind 15 N bis 44 N, 20 N bis 40 N und 25 N bis 35 N. Die Einstellung der Vorspannungskraft kann durch entsprechende Auswahl bzw. Auslegung eines Spannelements erfolgen oder durch Einstellung eines verstellbar ausgebildeten Spannelements.

Es ist weiter bevorzugt, wenn das Spannelement des Sekundärtriebs eines erfindungsgemäßen Steuertriebes funktional mit einem hydraulischen Dämpfungselement gekoppelt ist. In diesem Fall können kurzfristig auftretende Lasten, welche von der Hülltriebsstruktur auf das Spannelement einwirken, gedämpft werden, so dass Rückkoppelungen solcher Kräfte auf die Hülltriebsstruktur wirksam vermieden werden. Diesbezüglich wird insbesondere auf ein Spannelement mit einem hohlzylindrischen Gehäuse verwiesen, das einen in dem Gehäuse geführten zylindrischen Kolben umfasst, wobei zwischen dem Gehäuse und dem Kolben zur Erzeugung einer hydraulischen Dämpfung ein Leckagespalt vorgesehen ist, wobei die Breite des Leckagespaltes mindestens 46 µm beträgt. Bevorzugt beträgt die Breite des Leckagespalts mindestens 60 µm, weiter bevorzugt mindestens 65 µm und besonders bevorzugt mindestens 70 µm. Bevorzugte Bereiche für die Breite des Leckagespalts sind 46 µm bis 90 µm, 50 µm bis 80 µm und besonders bevorzugt 60 µm bis 75 µm. Eine wie vorstehend beschriebene Dimensionierung des Leckagespaltes führt zu einer aus dem Stand der Technik nicht bekannten, niedrigen Dämpfung und bewirkt eine weitere Reduzierung der Reibleistung in dem Steuertrieb.

Das Spannelement eines erfindungsgemäßen Steuertriebes kann besonders einfach und kostengünstig realisiert werden, wenn ein Federelement enthalten ist, um die Vorspannungskraft auf die zweite Hülltriebsstruktur zu erzeugen.

In einer weiteren praktischen Ausführungsform eines erfindungsgemäßen Steuertriebes dient der Sekundärtrieb dem Antrieb einer zweiten Nockenwelle und/oder eines Antriebsrades eines weiteren Elements. Die Erfindung wurde speziell für Steuertriebe entwickelt, bei welchem im Sekundärtrieb eine zweite Nockenwelle und als weiteres Element ein Antriebszahnrad eines Hochdruck-Kraftstoffpumpe angetrieben werden. In solchen Steuertrieben wurden die beschriebenen Vorteile bereits mithilfe von ausgiebigen Simulationsrechnungen und ersten Versuchen bestätigt.

Mit einem erfindungsgemäßen Steuertrieb können die in der Hülltriebsstruktur speziell bei VR6-Motoren der Anmelderin wirkenden Kräfte über den gesamten Drehzahlbereich des Verbrennungsmotors unterhalb eines Kraftniveaus von maximal 1.500 N gehalten werden, wobei die Kraft vorzugsweise im Bereich des zweiten Rotors und/oder dritten Rotors durch Auswertung ermittelt wird.

Weitere praktische Ausführungsformen sind nachfolgend im Zusammenhang mit den Zeichnungen beschrieben. Es zeigen:
- Fig. 1: einen erfindungsgemäßen mehrstufigen Steuertrieb,
- Fig. 2: das Zwischenrad des in Figur 1 dargestellten erfindungsgemäßen Steuertriebes in einer vergrößerten Darstellung,
- Fig. 3: die Kontur des kleinen Zahnrades des Zwischenrades im Vergleich zu einer kreisförmigen Kontur,
- Fig. 4: eine vergrößerte Darstellung des in Fig. 1 erkennbaren Spannelements des erfindungsgemäßen Steuertriebes,
- Fig. 5: ein Trumkraft-Motordrehzahl-Diagramm mit drei verschiedenen Verlaufskurven,
- Fig. 6: ein Trumkraft-Motordrehzahl-Diagramm mit drei verschiedenen Verlaufskurven,
- Fig. 7: ein Reibleistungs-Motordrehzahl-Diagramm zu dem in Fig. 6 gezeigten Trumkraft-Motordrehzahl-Diagramm,
- Fig. 8: den in Fig. 7 mit VIII gekennzeichneten Bereich in einer vergrößerten Darstellung und
- Fig. 9-11: analog zu Figur 3 drei verschiedene Beispiele von Konturen für Zwischenräder für Verbrennungsmotoren, welche der Summen-Schwingungsanregung durch Ventile und der Schwingungsanregung einer Kolbenpumpe durch Überlagerung von Ovalitäten unterschiedlicher Ordnung entgegengewirkt werden soll.

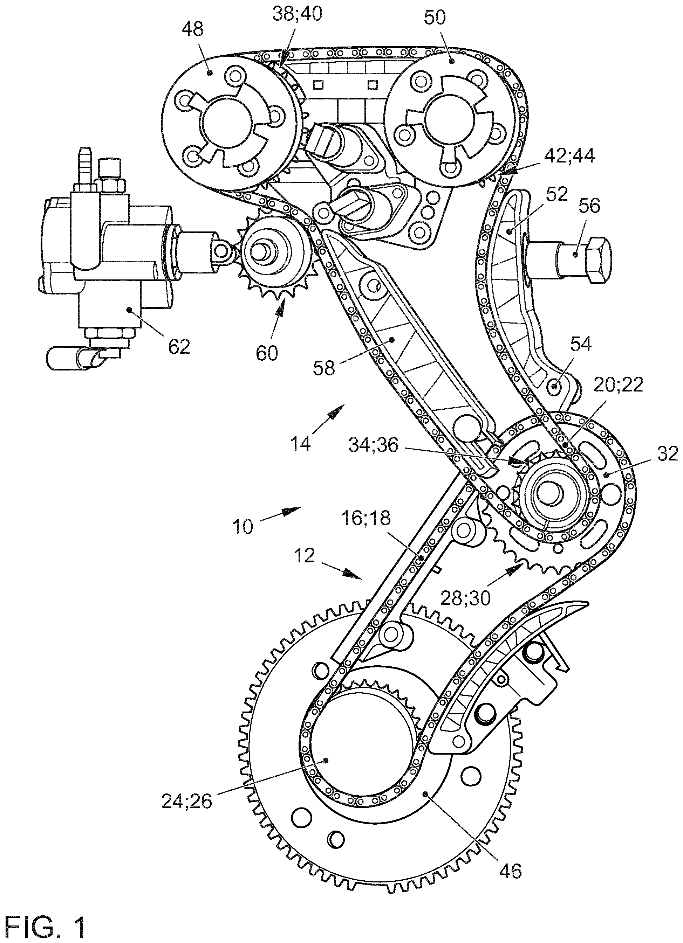

Figur 1 zeigt einen mehrstufigen Steuertrieb 10 eines Verbrennungsmotors eines Kraftfahrzeuges mit Sechs-Zylinder-Motor (hier: VR6-Motor) mit einem Primärtrieb 12 und einem Sekundärtrieb 14. Bei dem Primärtrieb 12 wurde als erste Hülltriebsstruktur 16 eine Kette 18 eingesetzt. Bei dem Sekundärtrieb 14 wurde als zweite Hülltriebsstruktur 20 ebenfalls eine Kette 22 eingesetzt. Die Kette 18 wird angetrieben von einem ersten Rotor 24, der als erstes Zahnrad 26 ausgebildet ist. Mittels der ersten Kette 18 wird durch den Primärtrieb 12 ein zweiter Rotor 28 angetrieben, der ebenfalls als Zahnrad 30 ausgebildet ist. Der zweite Rotor 28 ist Teil eines einstückig ausgebildeten Zwischenrades 32, das neben dem zweiten Rotor 28 einen dritten Rotor 34 umfasst, der ebenfalls als Zahnrad 36 ausgebildet ist. Alternativ können der zweite Rotor 28 und der dritte Rotor 34 als separate Bauteile hergestellt und drehfest miteinander zu einem Zusammenbauteil verbunden werden. Der dritte Rotor 34 dient als "Antriebselement" des Sekundärtriebes 14. Der Sekundärtrieb 14 umfasst ferner einen vierten Rotor 38, der als Zahnrad 40 ausgebildet ist, und einen fünften Rotor 42, der als Zahnrad 44 ausgebildet ist. Der erste Rotor 24 ist drehfest mit einer Kurbelwelle 46 verbunden. Der vierte Rotor 38 und der fünfte Rotor 42 sind mit in Figur 1 nicht erkennbaren Nockenwellen verbunden. In Figur 1 sind die Nockenwellen verdeckt von dem ersten Nockenwellenversteller 48 und dem zweiten Nockenwellenversteller 50. Der erste Nockenwellenversteller 48 verdeckt eine Einlass-Nockenwelle, welche die Öffnungs- und Schließzeiten der Einlassventile des nicht im Detail dargestellten Verbrennungsmotors steuert. Der zweite Nockenwellenversteller 50 verdeckt die Auslass-Nockenwelle, welche die Öffnungs- und Schließzeiten der Auslassventile des Verbrennungsmotors steuert.

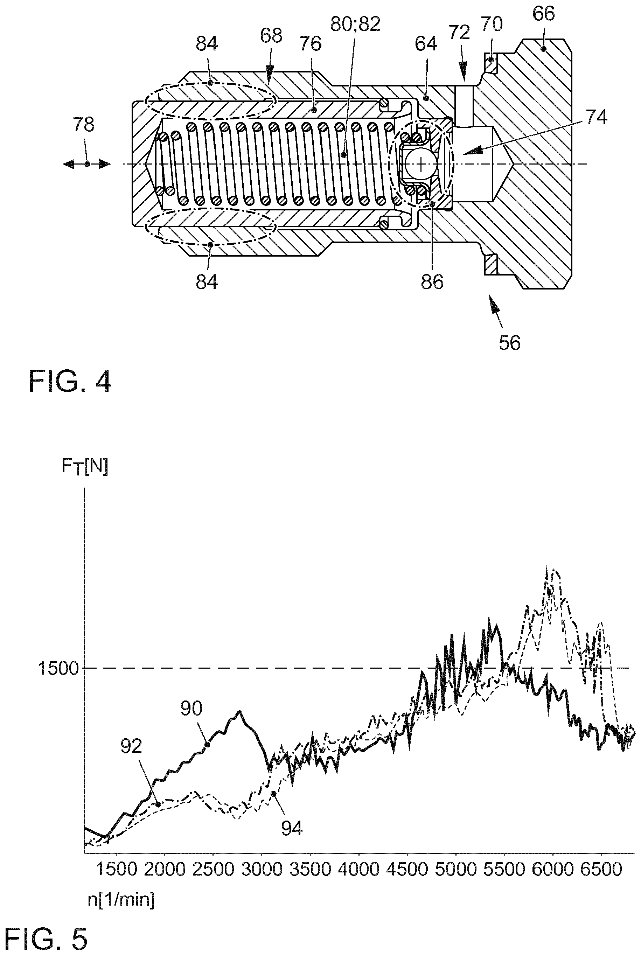

In Figur 1 ist ferner eine an der Außenseite der Kette 22 des Sekundärtriebes 14 angeordnete erste Gleitschiene 52 erkennbar, welche um eine Drehachse 54 drehbar gelagert ist und die Kette 22 des Sekundärtriebes 14 von außen führt. Die erste Gleitschiene 52 ist funktional verbunden mit einem Spannelement 56, das in Figur 4 in einer vergrößerten Darstellung im Detail dargestellt ist.

In dem Sekundärtrieb 14 ist eine weitere Gleitschiene 58 vorgesehen, welche die Kette 22 des Sekundärtriebes 14 auf der der ersten Gleitschiene 52 gegenüberliegenden Seite von innen führt und im oberen Bereich den Abstand zu einem Zahnrad 60 einer Hochdruckkraftstoffpumpe 62 konstant hält.

Wie in Figur 4 erkennbar ist, umfasst das Spannelement 56 ein hohlzylindrisches Gehäuse 64 mit einem daran ausgebildeten Sechskantschraubenkopf 66 und einem Außengewinde 68. Unmittelbar unterhalb des Schraubenkopfes 66 ist ein ringförmiges Dichtungselement 70 angeordnet. Ferner ist in dem Gehäuse 64 eine radiale Öffnung 72 ausgebildet, die in das Gehäuseinnere 74 führt. Im Gehäuseinneren 74 ist in einem zylindrischen Abschnitt des Gehäuses 64 ein zylindrischer Kolben 76 angeordnet. Der zylindrische Kolben 76 ist in Richtung des Doppelpfeiles 78 axial beweglich gelagert. In dem Kolben 76 ist als Spannelement 80 ein Federelement 82 angeordnet, um den Kolben 76 gegenüber dem Gehäuse 64 in Figur 4 nach links vorzuspannen. Diese Vorspannung wirkt auf die in Figur 1 erkennbare erste Gleitschiene 52, um mittels der Gleitschiene 52 eine Vorspannkraft auf die als zweite Hülltriebsstruktur 20 dienende Kette 22 zu erzeugen.

Zwischen dem Kolben 76 und dem Gehäuse 64 ist in dem Bereich 84 ein Leckagespalt vorgesehen, der sich durch einen Freiraum zwischen dem Außendurchmesser des Kolbens 76 und dem Innendurchmesser des in dem Innenbereich 84 den Kolben 76 umgebenden Innenwand des Gehäuses 64 ergibt. In der gezeigten Ausführungsform wurde als Leckagespalt zwischen der Innenwand des Gehäuses 64 und der Außenwand des Kolbens 76 in dem Bereich 84 eine Differenz von 70 µm vorgesehen.

Der Bereich des Gehäuses 64, welcher sich an die radiale Öffnung 72 anschließt, ist von dem Bereich, in welchem das Federelement 82 angeordnet ist, durch ein Rückschlagventil 86 gesichert. Mit diesem Rückschlagventil 86 wird verhindert, dass Öl aus dem Motorölkreislauf, welches durch die radiale Öffnung 72 in das Innere des Gehäuses 64 geströmt und durch das Rückschlagventil 86 gelangt ist, zurückströmen kann, wenn sich der Kolben 76 situationsbedingt von links nach rechts bewegt und somit einfedert. Im Falle des wie vorstehend beschriebenen Einfederns schließt das Rückschlagventil 86 und ermöglicht es dem Kolben 76 nur dadurch zurückzufedern, dass das Öl durch den Leckagespalt in dem Bereich 84 nach links aus dem Gehäuse 64 herausgefördert wird. Durch die Ausbildung des Leckagespaltes in dem Bereich 84 wird damit eine hydraulische Dämpfung des Kolbens 76 gegenüber dem Gehäuse 64 bewirkt.

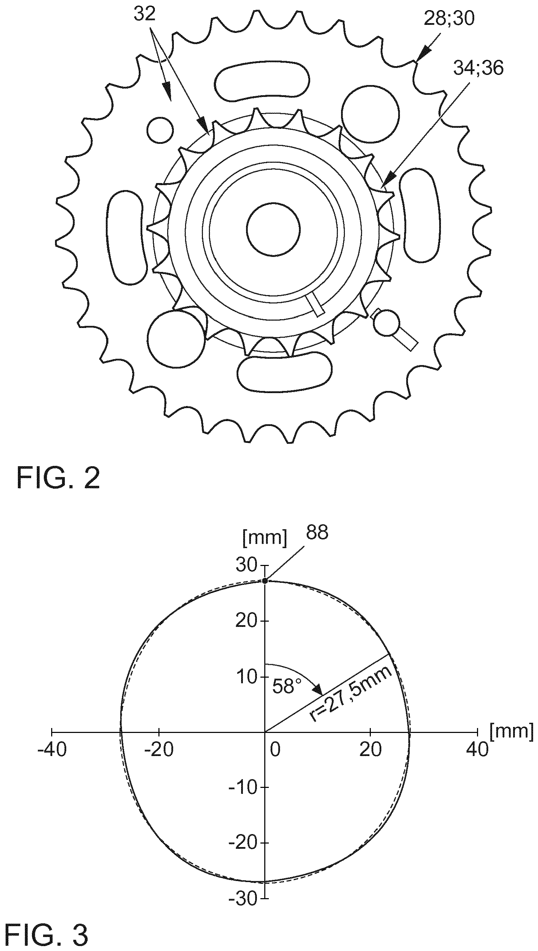

Figur 2 zeigt eine vergrößerte Darstellung des Zwischenrades 32 aus Figur 1. Wie zu erkennen ist, weist das als zweiter Rotor 28 dienende zweite Zahnrad 30 insgesamt 32 Zähne auf. Das als dritter Rotor 34 dienende dritte Zahnrad 36 weist insgesamt 18 Zähne auf. In der gezeigten Ausführungsform ist das als dritter Rotor 34 dienende dritte Zahnrad 36 mit einer nicht-kreisförmigen Kontur versehen. Die Kontur des Mittelkreises ist in Figur 3 mit einer durchgezogenen Linie dargestellt und einer gestrichelten wiedergegebenen kreisförmigen Kontur gegenübergestellt. Die Betragsangaben auf der x-Achse und y-Achse entsprechen der jeweiligen Ausdehnung in mm.

Wie zu erkennen ist, wurde für den Teilkreis des dritten Rotors 34 eine Kontur mit einer Ovalität vierter Ordnung gewählt, d.h. die Kontur weist über vollen Umfang des dritten Rotors 34 insgesamt vier Mal positiv und vier Mal negativ um 0,5 mm ab. Mit anderen Worten ausgedrückt, variiert der Radius des in Figur 3 mit einer durchgezogenen Linie wiedergegebenen Teilkreises des dritten Rotors 34 über den gesamten Umfang ausgehend von einem Teilkreisdurchmesser von 55 cm (entspricht einem Radius von 27,5 mm) zwischen 27 mm und 28 mm. In der in Figur 3 gezeigten Ausführungsform ist der dritte Rotor 34 ferner mit einer Phasenverdrehung von 58° versehen, d.h. ausgehend von dem mit 88 gekennzeichneten Nullphasenpunkt entspricht der Radius bei einem Winkel von 58° zum ersten Mal dem mittleren Radius von 27,5 mm.

Figur 5 zeigt am Beispiel eines Trumkraft-Motordrehzahl-Diagramms eine Kurve 90 mit dem Verlauf der im Bereich des dritten Rotors 34 gemessenen Kraft in Abhängigkeit der Motordrehzahl für ein drittes Zahnrad 36, das als dritter Rotor 34 dient und eine kreisförmige Kontur aufweist. Die Kurven 92 und 94 zeigen dazu im Vergleich den Verlauf der Kraft über die Motordrehzahl für als dritte Rotoren 34 dienende dritte Zahnräder 36 mit einer Ovalität vierter Ordnung, wobei die Kurve 92 sich auf eine Phasenlage von -50° bezieht und die Kurve 94 auf eine Phasenlage von -66°. Wie zu erkennen ist, ergibt sich in diesem Fall, in welchem gegenüber dem Stand der Technik lediglich im Bereich des Zwischenrades 32 und hier an dem kleineren, dritten Rotor 34 eine Ovalität vierter Ordnung vorgesehen wurde, in weiten Drehzahlbereichen eine geringere Trumkraft und somit auch eine geringere Reibleistung. Somit konnte die erfindungsgemäße Aufgabe bereits durch die Ausbildung einer Ovalität an dem Zwischenrad 32 (im unteren Drehzahlband bis ca. 3500 U/min) gelöst werden.

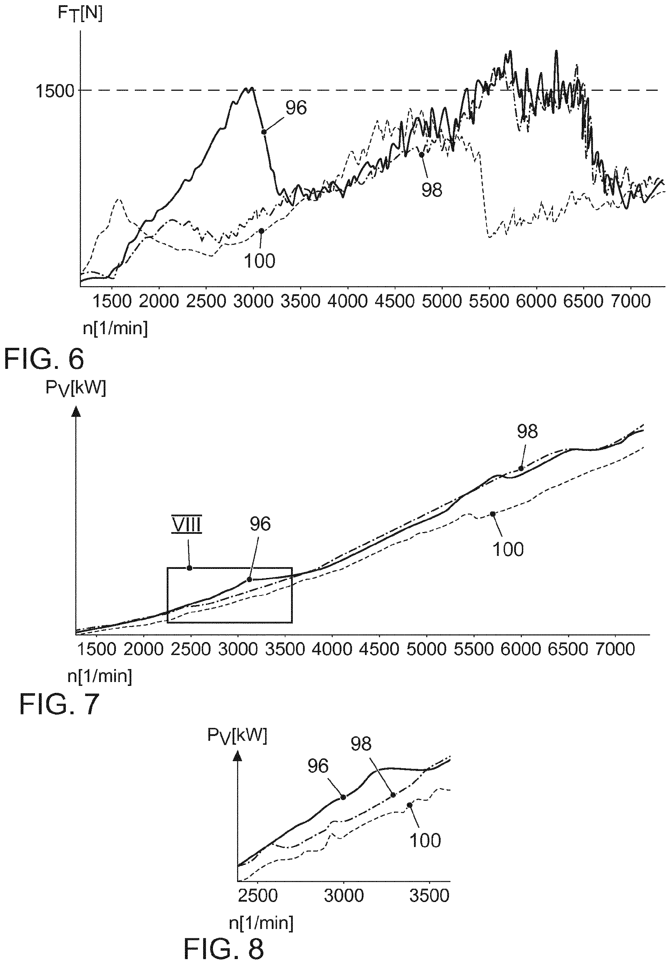

In den Figuren 6 bis 8 sind weitere Diagramme erkennbar, wobei in dem in Figur 6 gezeigten Diagramm analog zur Figur 5 die Trumkraft über die Motordrehzahl aufgetragen ist und in den Figuren 7 und 8 qualitativ die Verlustleistung in Abhängigkeit der Drehzahl aufgetragen ist.

Die Kurve 96 stellt die ermittelte Trumkraft über die Motordrehzahl für einen Steuertrieb dar, der dem Stand der Technik entspricht. Die Kurve 98 stellt die ermittelte Trumkraft in Abhängigkeit der Motordrehzahl eines Steuertriebes 10 mit einem Zwischenrad, bei welchem der dritte Rotor 34 eine Ovalität vierter Ordnung und eine Phasenlage von 60° +/- 10° (insbesondere 58°) aufweist, dar. Die Kurve 100 stellt die ermittelte Trumkraft in Abhängigkeit der Motordrehzahl bei einem erfindungsgemäßen Steuertrieb 10 dar, bei welchem der dritte Rotor 34 des Zwischenrades 36 mit einer Ovalität vierter Ordnung und einer Phasenverdrehung von 60° +/- 10° (insbesondere 58°) sowie mit einem wie in Figur 4 dargestellten Spannelement 56 mit einer Vorspannung von 30 N und einem Leckagespalt von 70 µm versehen ist.

Wie insbesondere in den Figuren 7 und 8 unmittelbar erkennbar ist, ist die Verlustleistung eines erfindungsgemäßen Steuertriebes 10 bei Verwendung eines Zwischenrades 32 mit einer Ovalität und insbesondere in Verbindung mit einem modifizierten Spannelement 56 erkennbar reduziert. Im letztgenannten Fall ergibt sich nahezu über den gesamten Drehzahlbereich des Verbrennungsmotors eine reduzierte Reibleistung, so dass unabhängig vom Fahrzustand des Fahrzeuges stets eine Einsparung gegenüber dem Stand der Technik erfolgt.

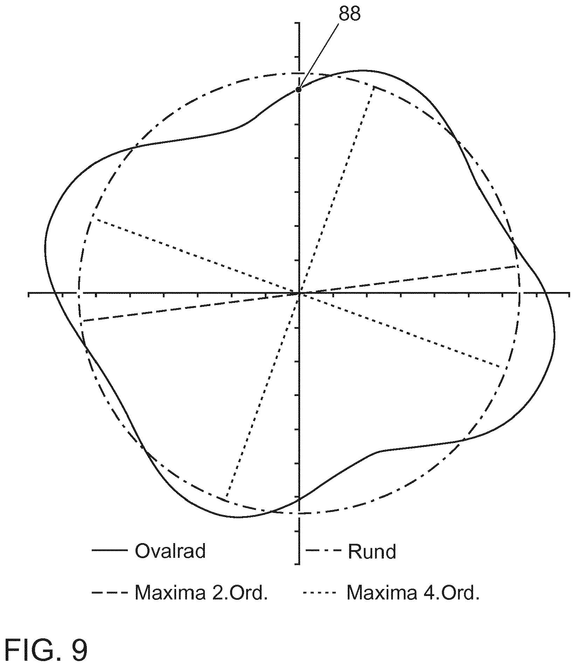

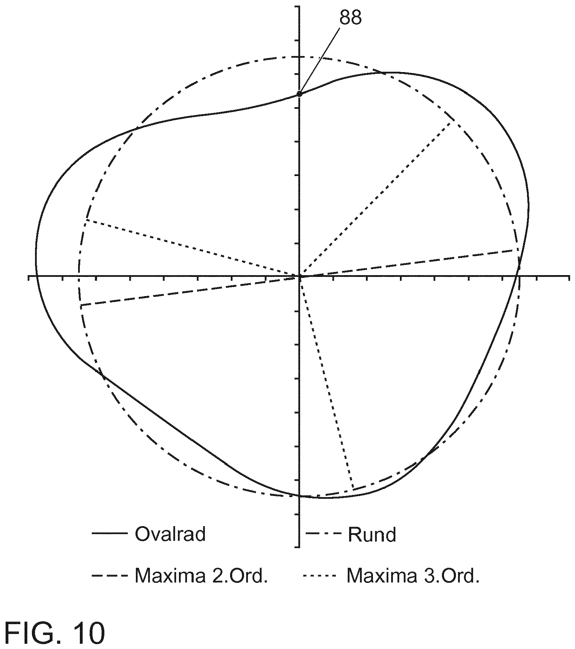

In den Figuren 9-11 sind Konturen von Zwischenrädern für Verbrennungsmotoren mit den Merkmalen gemäß der nachstehenden Tabelle gezeigt.

| Figur | Zylinderzahl | Ventiltriebsanregung Ordnung [in Bezug auf KW] | Pumpenanregung Ordnung [in Bezug auf KW] | mögliche Ovalrad-Kombinationen |
|---|---|---|---|---|
| 9 | 4 | 2. | 4. | 2. und 4. |
| 10 | 4 | 2. | 3. | 2. und 3. |
| 11 | 6 | 3. | 4. | 3. und 4. |

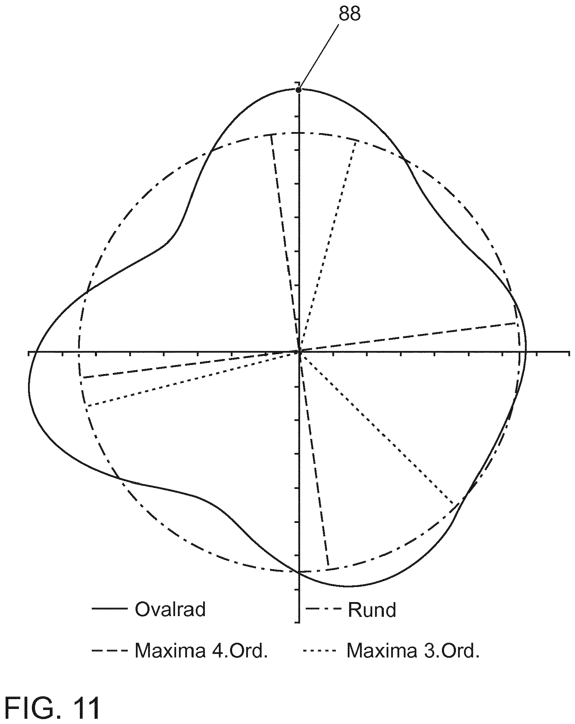

Bei den in der vorstehenden Tabelle genannten Werten und den zugehörigen Ausführungsbeispielen wurde die Ovalität - wie bei dem in Verbindung mit den Figuren 1-3 beschriebenen Ausführungsbeispiel - an dem dritten Rotor 34 eines Sekundärtriebes 14 ausgebildet. Die vorstehend genannten Ordnungen beziehen sich auf die Drehzahl der Kurbelwelle 46. Es wird zunächst das Ausführungsbeispiel gemäß Figur 11 erläutert. Die übrigen Ausführungsbeispiele ergeben sich aus analogen Betrachtungen.

Ausgehend von der Zylinderzahl 6 und mit der Annahme, dass der dritte Rotor 34 mit der gleichen Drehzahl dreht wie die Kurbelwelle 46, ergibt sich, dass die Ventiltriebsanregung dritter Ordnung ist. Dies folgt daraus, dass die Anregung der Ventile von der Nockenwelle kommt, welche mit halber Drehzahl der Kurbelwelle 46 dreht. Das Verhältnis der Drehzahl eines Zahnrades 60, das mit einer Hochdruckkraftstoffpumpe 62 verbunden ist, zu dem dritten Rotor 34, beträgt 4:3. Bei der Hochdruckkraftstoffpumpe 62 handelt es sich um eine dreihubige Kolbenpumpe. Daraus folgt, dass die Kolbenpumpe in Bezug auf die Drehzahl der Kurbelwelle 46 vierter Ordnung ist.

Aus der Gesamtbetrachtung ergibt sich damit, dass an dem dritten Rotor 34 für die Kontur des Ovalrades eine Ovalität dritter Ordnung und eine Ovalität vierter Ordnung überlagert werden, wobei jede Ovalität in korrekter Phasenlage an dem dritten Rotor 34 anzuordnen ist.

Wenn die vorstehende Annahme, dass das Zwischenrad 32, an welchem die Ovalität ausgebildet ist, mit der gleichen Drehzahl wie die Kurbelwelle 46 dreht, nicht zutrifft, muss eine vorhandene Übersetzung zwischen Kurbelwelle 46 und dem mit einer Ovalität versehenen Zwischenrad 32 noch zusätzlich berücksichtigt werden.

In allen vorstehenden Beispielen aus den Figuren 9-11 ergibt sich aus der Zahl der Zylinder und einer Summen-Betrachtung (Summen-Schwingungsanregung aller Ventile des Ventiltriebs) eine Ordnung für die Ventiltriebsanregung aller Ventile, die der Hälfte der Zylinderzahl entspricht. Dies ist auf die Tatsache zurückzuführen, dass in dem Beispiel davon ausgegangen wird, dass das Zwischenrad 32 mit Ovalität sich genauso schnell dreht wie die Kurbelwelle 46 und die Nockenwelle zur Betätigung der Ventile sich gegenüber der Kurbelwelle 46 nur mit halber Geschwindigkeit dreht. Die Ordnung der Pumpenanregung (Kolbenpumpe) wurde durch Berechnung oder experimentell ermittelt. Jede der Ovalitäten wird in allen Beispielen der Figuren 9-11 zusammen mit der entsprechenden Phasenlage gegenüber dem Nullphasenpunkt 88 ermittelt. Im Ergebnis werden die ermittelten Ovalitäten mit ihren Ordnungen und ihrer Phasenlage dann gemäß der letzten Spalte der obigen Tabelle auf das Zwischenrad 32 übertragen und dort überlagert in Form der Kontur wiedergegeben.

### Bezugszeichenliste

- 10: Steuertrieb
- 12: Primärtrieb
- 14: Sekundärtrieb
- 16: erste Hülltriebsstruktur
- 18: Kette
- 20: zweite Hülltriebsstruktur
- 22: Kette
- 24: erster Rotor
- 26: erstes Zahnrad
- 28: zweiter Rotor
- 30: zweites Zahnrad
- 32: Zwischenrad
- 34: dritter Rotor
- 36: drittes Zahnrad
- 38: vierter Rotor
- 40: viertes Zahnrad
- 42: fünfter Rotor
- 44: fünftes Zahnrad
- 46: Kurbelwelle
- 48: erster Nockenwellenversteller
- 50: zweiter Nockenwellenversteller
- 52: erste Gleitschiene
- 54: Drehachse
- 56: Spannelement
- 58: zweite Gleitschiene
- 60: Zahnrad
- 62: Hochdruckkraftstoffpumpe
- 64: Gehäuse (des Spannelements)
- 66: Sechskantschraubenkopf
- 68: Außengewinde
- 70: Dichtungselement
- 72: radiale Öffnung
- 74: Gehäuseinneres
- 76: Kolben
- 78: Doppelpfeil
- 80: Spannelement (im Kolben)
- 82: Federelement (im Kolben)
- 84: Innenbereich
- 86: Rückschlagventil
- 88: Nullphasenpunkt
- 90: Kurve
- 92: Kurve
- 94: Kurve
- 96: Kurve
- 98: Kurve
- 100: Kurve

## Patentansprüche

1. Mehrstufiger Steuertrieb eines Verbrennungsmotors mit einer Kurbelwelle (46) und mindestens einer Nockenwelle, wobei der Steuertrieb (10) einen Primärtrieb (12) umfasst, mittels welchem ein mit einer Kurbelwelle (46) gekoppelter erster Rotor (24) über eine erste Hülltriebsstruktur (16) einen zweiten Rotor (28) antreibt, wobei der zweite Rotor (28) drehfest mit einem dritten Rotor (34) verbunden ist und wobei der dritte Rotor (34) Antriebselement eines Sekundärtriebes (14) ist, mittels welchem über eine zweite Hülltriebsstruktur (20) ein mit der mindestens einen Nockenwelle gekoppelter vierter Rotor (38) angetrieben wird, wobei der zweite Rotor (28) und/oder der dritte Rotor (34) eine nicht-kreisförmige Kontur aufweist, und wobei der zweite Rotor (28) und/oder der dritte Rotor (34) eine Kontur mit einer mindestens einfachen Ovalität aufweist,
**dadurch gekennzeichnet,**
**dass** die Amplitude der Ovalität im Bereich von 0,1 bis 5 Prozent des Teilkreisdurchmessers beträgt.

2. Steuertrieb nach dem vorstehenden Anspruch, **dadurch gekennzeichnet, dass** der Sekundärtrieb (14) ein Spannelement (56) umfasst, mittels welchem eine Vorspannungskraft auf die zweite Hülltriebsstruktur (20) ausgeübt wird.

3. Steuertrieb nach dem vorstehenden Anspruch, **dadurch gekennzeichnet, dass** das Spannelement (56) auf eine sich entlang der zweiten Hülltriebsstruktur (20) erstreckende Gleitschiene (52) und/oder ein Spann-Kettenrad wirkt und die Hülltriebsstruktur (20) mit Hilfe der Gleitschiene (52) und/oder des Spann-Kettenrades vorgespannt wird.

4. Steuertrieb nach einem der beiden vorstehenden Ansprüche, **dadurch gekennzeichnet, dass** die Vorspannungskraft des Spannelements (56) kleiner als 45 N eingestellt ist.

5. Steuertrieb nach einem oder mehreren der vorstehenden Ansprüche, **dadurch gekennzeichnet, dass** das Spannelement (80) des Sekundärtriebs (14) funktional mit einem hydraulischen Dämpfungselement gekoppelt ist.

6. Steuertrieb nach dem vorstehenden Anspruch, **dadurch gekennzeichnet, dass** das Spannelement (80) ein hohlzylindrisches Gehäuse (64) mit einem in den Gehäuse (64) geführten zylindrischen Kolben (76) umfasst, wobei zwischen dem Gehäuse (64) und dem Kolben (76) zur Erzeugung einer hydraulischen Dämpfung ein Leckagespalt vorgesehen ist, wobei die Breite des Leckagespalts mindestens 46 µm beträgt.

7. Steuertrieb nach einem oder mehreren der Ansprüche 2 bis 6, **dadurch gekennzeichnet, dass** das Spannelement (80) ein Federelement (82) umfasst, um eine Vorspannungskraft zu erzeugen.

8. Steuertrieb nach einem oder mehreren der vorstehenden Ansprüche, **dadurch gekennzeichnet, dass** der Sekundärtrieb dem Antrieb einer zweiten Nockenwelle und/oder eines Antriebsrades eines weiteren Elements dient.

## Claims

1. Multi-stage timing drive of a combustion engine with a crankshaft (46) and at least one camshaft, wherein the timing drive (10) comprises a primary drive (12), by means of which a first rotor (24) connected to a crankshaft (46) drives a second rotor (28) via a first endless flexible member (16), wherein the second rotor (28) is connected firmly so that it can rotate to a third rotor (34) and wherein the third rotor (34) is a drive element of a secondary drive (14), by means of which a fourth rotor (38) connected to the at least one camshaft is driven via a second endless flexible member (20), wherein the second rotor (28) and/or the third rotor (34) exhibits a non-circular contour, and wherein the second rotor (28) and/or the third rotor (34) exhibits a contour with an at least simple ovality,
**characterised in that**
the amplitude of the ovality is in the region of 0.1 to 5 percent of the pitch circle diameter.

2. Timing drive according to the preceding claim,
**characterised in that** the secondary drive (14) comprises a tensioning element (56), by means of which a pre-tensioning force is exerted on the second endless flexible member (20).

3. Timing drive according to the preceding claim,
**characterised in that** the tensioning element (56) acts on a sliding rail (52) extending along the second endless flexible member (20) and/or a tensioned sprocket and the endless flexible member (20) is pretensioned by means of the sliding rail (52) and/or the tensioned sprocket.

4. Timing drive according to any one of the two preceding claims, **characterised in that** the pre-tensioning force of the tensioning element (56) is set less than 45 N.

5. Timing drive according to one or more of the preceding claims, **characterised in that** the tensioning element (80) of the secondary drive (14) is connected functionally to a hydraulic dampening element.

6. Timing drive according the preceding claim, **characterised in that** the tensioning element (80) comprises a hollow cylindrical housing (64) with a cylindrical piston (76) guided in the housing (64), wherein between the housing (64) and the piston (76), a leakage gap is provided to generate a hydraulic dampening, wherein the width of the leakage gap is at least 46 µm.

7. Timing drive according to one or more of claims 2 to 6, **characterised in that** the tensioning element (80) comprises a spring element (82) to generate a pre-tensioning force.

8. Timing drive according to one or more of the preceding claims, **characterised in that** the second drive serves as the drive of a second camshaft and/or a drive wheel of a further element.

## Revendications

1. Entraînement de commande à plusieurs étages d'un moteur à combustion interne comprenant un arbre à manivelle (46) et au moins un arbre à came, l'entraînement de commande (10) comportant un entraînement primaire (12), au moyen duquel un premier rotor (24), couplé à un arbre à manivelle (46), entraîne, par l'intermédiaire d'une première structure d'entraînement à organe flexible (16), un deuxième rotor (28), le deuxième rotor (28) étant raccordé de manière solidaire en rotation à un troisième rotor (34) et le troisième rotor (34) étant un élément d'entraînement d'un entraînement secondaire (14), au moyen duquel, par l'intermédiaire d'une deuxième structure d'entraînement à organe flexible (20), un quatrième rotor (38), couplé à l'au moins un arbre à came, étant entraîné, le deuxième rotor (28) et/ou le troisième rotor (34) comportant un contour non circulaire, et le deuxième rotor (28) et/ou le troisième rotor (34) comportant un contour doté d'une ovalité au moins simple,
**caractérisé en ce que**
l'amplitude de l'ovalité se situe dans la plage de 0,1 à 5 pour cent du diamètre de cercle primitif.

2. Entraînement de commande selon la revendication précédente, **caractérisé en ce que** l'entraînement secondaire (14) comporte un élément de serrage (56), au moyen duquel une force de précontrainte est exercée sur la deuxième structure d'entraînement à organe flexible (20).

3. Entraînement de commande selon la revendication précédente, **caractérisé en ce que** l'élément de serrage (56) agit sur une glissière (52) s'étendant le long de la deuxième structure d'entraînement à organe flexible (20) et/ou un pignon à chaîne de serrage et la structure d'entraînement à organe flexible (20) est précontrainte à l'aide de la glissière (52) et/ou du pignon à chaîne de serrage.

4. Entraînement de commande selon l'une quelconque des deux revendications précédentes, **caractérisé en ce que** la force de précontrainte de l'élément de serrage (56) est réglée inférieure à 45 N.

5. Entraînement de commande selon l'une quelconque ou la pluralité de revendications précédentes, **caractérisé en ce que** l'élément de serrage (80) de l'entraînement secondaire (14) est couplé de manière fonctionnelle à un élément d'amortissement hydraulique.

6. Entraînement de commande selon la revendication précédente, **caractérisé en ce que** l'élément de serrage (80) comporte un boîtier (64) cylindrique creux doté d'un piston (76) cylindrique guidé dans le boîtier (64), entre le boîtier (64) et le piston (76), pour générer un amortissement hydraulique, un interstice de fuite étant située, la largeur de l'interstice de fuite étant d'au moins 46 µm.

7. Entraînement de commande selon l'une quelconque ou la pluralité de revendications 2 à 6, **caractérisé en ce que** l'élément de serrage (80) comporte un élément ressort (82) pour générer une force de contrainte.

8. Entraînement de commande selon l'une quelconque ou la pluralité de revendications précédentes, **caractérisé en ce que** l'entraînement secondaire sert à entraîner un deuxième arbre à came et/ou d'une roue d'entraînement d'un autre élément.
